# EUROPEAN PATENT APPLICATION

(11) **EP 1 720 017 A2**
(43) Date of publication of application: **08.11.2006**
(21) Application number: 06009358.0
(22) Date of filing: 05.05.2006
(51) Int. Cl.: G01N 35/10, G01N 21/55

(54) **Sample recovery method and device**

(30) Priority: 06.05.2005 JP 2005135243
(71) Applicant: Fuji Photo Film Co., Ltd., Minami-Ashigara-shi, Kanagawa (JP)
(72) Inventor: Ogura, Nobuhiko, Kaisei-machi, Ashigarakami-gun, Kanagawa (JP)
(74) Representative: Klunker . Schmitt-Nilson . Hirsch

(57) **Abstract**

A surface plasmon resonance (SPR) assay apparatus has a sample recovery device for recovering a bindable sample, which is obtained from a sample by causing a sample fluid of the sample to contact an immobilization film (22, 122) provided with a ligand immobilized thereon, and by binding the sample with the ligand. A recovery stage (103) is loaded with a sensor unit (12, 120) for assay in a removable manner. The sensor unit includes a prism (14) overlaid with the immobilization film, and a flow cell (41, 123), secured to the prism, and having a flow channel (16, 121) for introducing the sample fluid to the immobilization film. A dispensing head (26, 109) has a pipette assembly (26a, 26b, 108) for fluid dispensation and aspiration, for accessing the recovery stage, a delivery reservoir (88, 105) for storing the sample fluid, and a collection reservoir (88, 106) for recovering the bindable sample removed from the flow channel.

## Description

### BACKGROUND OF THE INVENTION

### 1. Field of the Invention

The present invention relates to a sample recovery method and device. More particularly, the present invention relates to a sample recovery method and device in which a bindable sample of samples such as biomaterial or drug can be recovered with a high throughput.

### 2. Description Related to the Prior Art

A mass spectrometer for mass spectrometry is known for analysis and determination of biomaterials. Various samples are derived from an animal cell, and include peptide, protein and the like. The mass spectrometer ionizes the samples, separates the samples according to data of a ratio of its mass per charge, detects ion from the samples, and finally records a molecular weight of the material of the detected ion.

To recover unknown ones of the samples to be treated in the mass spectrometry, there is a known method. A sample fluid containing the samples derived from the animal cell is introduced to contact a ligand immobilization film where the peptide or the protein is immobilized as a ligand. After this, elution fluid is introduced to the ligand immobilization film to dissociate a bindable sample of the samples and the ligand from the ligand. The bindable sample is recovered.

U.S. Pat. Nos. 5,395,587 and 5,561,069 (corresponding to JP-A 9-500208) discloses recovery of a sample used in a surface plasmon resonance (SPR) assay apparatus in combination with a sensor chip for assay. The SPR assay apparatus is known as an assay apparatus in utilizing attenuated total reflection. Surface plasmon is a term to mean the compressional wave created on the surface of the metal and included in plasmon as quantized expression of the compressional wave. Free electrons in a metal vibrate to generate the compressional wave. The sensor unit of a chip type includes a glass substrate and a thin film of metal formed thereon, and is placed on the assay stage for assay.

In the assay apparatus, the sensing surface is positioned opposite to an interface where a metal thin film is connected with a dielectric block. The sensing surface is caused to create surface plasmon resonance. Reaction of samples is assayed by detecting the SPR on the sensing surface. Then total reflection of the illuminating light occurs. Upon the total reflection created on the metal/dielectric interface, a small component of the light passes through the metal film without reflection, and penetrates to the sensing surface. A wave of the penetrating component is called an evanescent wave. Surface plasmon resonance (SPR) is created when frequency of the evanescent wave coincides with that of the surface plasmon. In response to this, intensity of the reflected light attenuates remarkably. In the assay apparatus, the attenuation in the reflected light reflected by the metal/dielectric interface is detected, to recognize creation of the SPR on the sensing surface.

A resonance angle or incident angle of light for generating surface plasmon resonance depends on a refractive index of a medium in which an evanescent wave and surface plasmon are propagated. A resonance angle in generating the surface plasmon resonance changes when the refractive index of the medium changes. A material in contact with the sensing surface is the medium of propagating the evanescent wave and the surface plasmon. When binding, dissociation or other reaction occurs on the sensing surface between plural molecules, changes in the refractive index occur, to change the resonance angle. The assay apparatus measures interaction between molecules by determining changes in the resonance angle.

The assay apparatus can determine whether the sample is bound with or free from the ligand according to contacting of the sample with the ligand. It is possible to find existence or lack of the bindable sample in the recovered fluid before the mass spectrometry. Operation of the mass spectrometry can be efficient.

The assay apparatus of U.S. Pat. Nos. 5,395,587 and 5,561,069 (corresponding to JP-A 9-500208) is loaded with a sensor unit of a chip type in a removable manner. A sensing surface of the sensor unit is overlaid with the ligand immobilization film for immobilizing the ligand. A flow cell is included in the assay apparatus, and has a flow channel to dispense fluid to the sensing surface. The sensor unit is set in a direction to position the sensing surface in the flow channel.

A connector block is secured to the flow cell for connecting a tube with the flow channel. The tube supplies the flow channel with the sample fluid and elution fluid, also draws the fluid for removal and recovery.

However, the flow cell is disposed in the assay apparatus in the known system. If a plurality of the sample fluid are used for contacting the ligand immobilization film, the flow cell or the tube must be washed at each time of introducing one example of the sample fluid to the ligand immobilization film. Much time is required for recovering the bindable sample from the plurality of the sample fluid. Throughput in the sample recovery cannot be raised.

As the tube is used for delivery and removal of the sample fluid, long paths are required for delivery to the ligand immobilization film and removal from the ligand immobilization film. A required amount of the sample fluid must be great. Also, the cost of the sample is very high in general. However, it is impossible in the known techniques to reduce the amount of the sample in view of desired recovery of the bindable sample.

### SUMMARY OF THE INVENTION

In view of the foregoing problems, an object of the present invention is to provide a sample recovery method and device in which bindable sample such as biomaterial or drug can be recovered with a high throughput.

In order to achieve the above and other objects and advantages of this invention, a sample recovery method of recovering a bindable sample is provided, the bindable sample being obtained from a sample by causing a sample fluid of the sample to contact an immobilization film provided with a ligand immobilized thereon, and by binding the sample with the ligand. In the sample recovery method, an immobilization unit is used, and includes a support overlaid with the immobilization film, and a flow cell, secured to the support, and having a flow channel for introducing the sample fluid to the immobilization film. There is a dispensing step of dispensing the sample fluid into the flow channel through a dispensing head to the immobilization film, wherein the dispensing head has a pipette assembly for accessing orifices formed at ends of the flow channel. There is a dissociating step of dispensing elution fluid into the flow channel through the dispensing head to the immobilization film, and of dissociating the bindable sample from the immobilization film. There is a recovering step of removing the bindable sample with the elution fluid from the flow channel by aspirating the elution fluid through the dispensing head, and of recovering the bindable sample by use of a collection reservoir.

Furthermore, there is an eliminating step of, after the dispensing step and before the dissociating step, dispensing buffer into the flow channel through the dispensing head, and of eliminating uncomplexed sample with the buffer from the flow channel, the uncomplexed sample being derived from the sample and remaining unbound with the ligand.

The support is a transparent dielectric support, the immobilization unit is a sensor unit and has a thin film overlaid on the dielectric support, and an immobilization film overlaid on the thin film, and when illuminating light is applied through the dielectric support to an interface between the thin film and the dielectric support in a form satisfying a total reflection condition, an attenuation angle of attenuation of total reflection of the illuminating light is changed according to interaction between the ligand and the sample.

The thin film is film of metal, and the sensor unit is a surface plasmon resonance sensor unit for generating surface plasmon resonance on the metal film.

Furthermore, there is a measuring step of measuring attenuation of the illuminating light being reflected after the sample fluid flows to the immobilization film. Whether the sample is bound with or free from the ligand is determined according to measured data from the optical assay unit, wherein the recovering step is carried out if the sample is bound with the ligand.

The sensor unit is set on an assay stage to carry out the dispensing step and the measuring step. If the sample is bound with the ligand, the sensor unit is transferred to a recovery stage distinct from the assay stage, to carry out the recovering step.

The assay stage is disposed in an assay apparatus having an optical assay unit, and the recovery stage is disposed in a sample recovery device having a casing separate from the assay apparatus.

Also, a sample recovery device for recovering a bindable sample is provided, the bindable sample being obtained from a sample by causing a sample fluid of the sample to contact an immobilization film provided with a ligand immobilized thereon, and by binding the sample with the ligand. In the sample recovery device, a recovery stage is loaded with an immobilization unit in a removable manner, wherein the immobilization unit includes a support overlaid with the immobilization film, and a flow cell, secured to the support, and having a flow channel for introducing the sample fluid to the immobilization film. A dispensing head has a pipette assembly for fluid dispensation and aspiration, for accessing the recovery stage, a delivery reservoir for storing the sample fluid, and a collection reservoir for recovering the bindable sample removed from the flow channel.

The support is a transparent dielectric support, the immobilization unit is a sensor unit and has a thin film overlaid on the dielectric support, and an immobilization film overlaid on the thin film, and when illuminating light is applied through the dielectric support to an interface between the thin film and the dielectric support in a form satisfying a total reflection condition, an attenuation angle of attenuation of total reflection of the illuminating light is changed according to interaction between the ligand and the sample.

Furthermore, there is an optical assay unit for assay to generate measured data as to whether the sample is bound with or free from the ligand, the optical assay unit having a light source for applying illuminating light to the sensor unit, and a photo detector for receiving the illuminating light being reflected, to output a detection signal.

Furthermore, a controller determines whether the sample is bound with or free from the ligand according to the measured data from the optical assay unit, and for driving the dispensing head to recover the bindable sample if the sample is bound with the ligand.

After dispensing the sample fluid and before dispensing the elution fluid, the dispensing head dispenses buffer into the flow channel, and eliminates uncomplexed sample with the buffer from the flow channel, the uncomplexed sample being derived from the sample and remaining unbound with the ligand.

An assay stage is used for setting the sensor unit to dispense the sample fluid and for the assay. If the sample is bound with the ligand, the sensor unit is transferred to the recovery stage to recover the bindable sample.

Furthermore, a casing has the recovery stage. The assay stage is disposed in an assay apparatus having the optical assay unit, and separate from the casing.

According to the present invention, it is possible to raise throughput in the sample recovery, because it is unnecessary to wash a flow cell after use of one time. Also, sample recovery for mass spectrometry is possible even with a small amount of samples, because the dispenser can introduce sample fluid into the flow channel for contact with a ligand immobilization film.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating a sensor unit and an assay apparatus;
Fig. 2 is an exploded perspective view illustrating the sensor unit;
Fig. 3 is a perspective view illustrating the assay apparatus;
Fig. 4 is a flow chart illustrating recovery of bindable sample;
Fig. 5 is a perspective view illustrating a sample recovery device; and

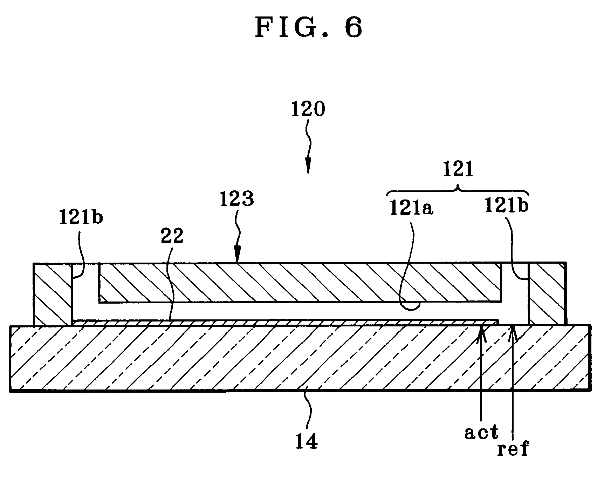

Fig. 6 is a cross section illustrating another preferred sensor unit having a longer flow channel.

### DETAILED DESCRIPTION OF THE PREFERRED EMBODIMENT(S) OF THE PRESENT INVENTION

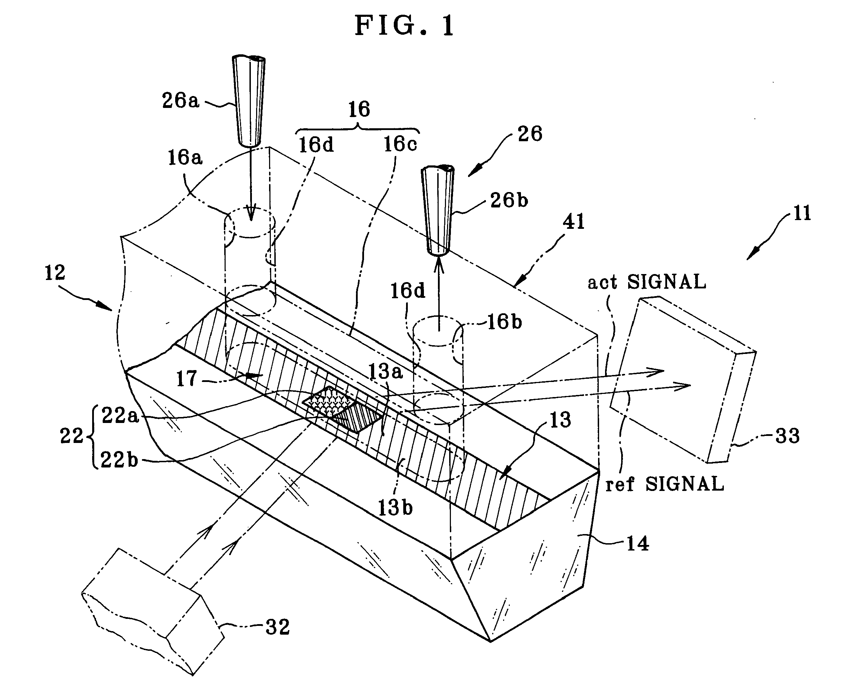

In Fig. 1, an SPR assay apparatus 11 or biosensor is loaded with an SPR sensor unit or immobilization unit 12 for surface plasmon resonance (SPR) assay. A bindable sample is recovered in the assay apparatus 11. The sensor unit 12 includes a thin film 13 of metal, a prism 14 as a dielectric support, and a flow cell 41. A first surface of the thin film 13 is a sensing surface 13a where surface plasmon resonance is generated. A second surface of the thin film 13 is an interface 13b defined by connection with the prism 14, and receives light of incidence. A flow channel 16 is formed in the flow cell 41, and causes sample fluids.

An example of material for the thin film 13 is gold (Au) or the like. A thickness of the thin film 13 is 50 nm, but can be changed for the suitability in view of the material of the thin film 13, a wavelength of light to be applied, and the like. The prism 14 is a transparent dielectric block, and overlaid with the thin film 13. Illuminating light is condensed by the prism 14 for application to the interface 13b to satisfy the total reflection condition.

The flow channels 16 are in the U shape, and has a flow cell recess 16c and channel end portions 16d. The flow cell recess 16c extends along the sensing surface 13a, and so positioned that the sensing surface 13a lies therein. The channel end portions 16d extend vertically from ends of the flow cell recess 16c toward the upside of the flow cell 41. Ends of the flow channels 16 respectively include a first orifice 16a and second orifice 16b. The first-orifice 16a receives introduction of a sample fluid. The second orifice 16b is accessed for drawing the sample fluid. A horizontal width or diameter of the flow channels 16 is approximately 1 mm. An interval between the first and second orifices 16a and 16b of the flow channel 16 is approximately 10 mm.

A lower side of the flow channels 16 where the flow cell recess 16c is open is enclosed by the prism 14 having the sensing surface 13a. Fluid in the flow channel 16 flows in the flow cell recess 16c in contact with the sensing surface 13a. There are defined sensor cells or measuring cells 17 each of which is a portion of the sensing surface 13a closed by the portion about the recess. In the present embodiment, the sensor unit 12 has plural sensor cells 17, for example three.

An immobilization film or linker film 22 for ligand is overlaid on the center of the sensing surface 13a. The immobilization film 22 is bindable with the ligand for immobilization. The immobilization film 22 is previously produced in the course of manufacturing the sensor unit 12. An example of ligand for immobilization on the immobilization film 22 is peptide. As the immobilization film 22 is a basis for immobilizing the ligand, various materials are available for selective use according to the type of the ligand to be immobilized. A ligand immobilizing flow of the ligand is to introduce fluid into the flow channel 16, the fluid containing the peptide and a fluid medium into which the peptide is added, for example, solution of the peptide in solvent.

The sensor unit 12 is set in the assay apparatus 11 removably. A dispensing head or dispenser 26 is included in the assay apparatus 11, and has a first pipette tube 26a and a second pipette tube 26b in a dual pipette assembly. The first pipette tube 26a is set at the first orifice 16a. The second pipette tube 26b is set at the second orifice 16b. The first pipette tube 26a introduces fluid to the flow channel 16. The second pipette tube 26b aspirates and removes fluid from the flow channel 16.

For example, the sample fluid is dispensed by the first pipette tube 26a into the first orifice 16a, and introduced to the immobilization film 22. The sample fluid contains a plurality of proteins derived from an animal cell. The sample of the plural proteins is diffused in the sample fluid, and contacts the ligand immobilized on the immobilization film 22. If the sample contains an example specifically bindable with the ligand, the example binds with the ligand on the immobilization film 22. The sample fluid in the flow channel 16 is kept stored for a predetermined time. At the end of this, the sample fluid is drawn by the second pipette tube 26b through the second orifice 16b and removed.

Until the immobilization, the sample fluid in the flow channel 16 may be left to stand in a stationary state. However, the sample fluid can be preferably stirred or turbulently flowed for ensured fluidity in the flow channel 16. The stirring or turbulent flow can diffuse the sample rapidly in the sample fluid, and promote binding of the sample with the immobilization film 22, to raise an immobilized amount of the sample. The number of times of dispensation and aspiration can be not only one but two or more.

When the fluid is removed from the flow channel 16, the uncomplexed sample without binding with the ligand is mostly eliminated from the immobilization film 22. However, a small part of the uncomplexed sample remains on the immobilization film 22. To remove the uncomplexed sample as residue, the first pipette tube 26a dispenses a buffer into the flow channel 16. The buffer in the flow channel 16 removes the uncomplexed sample from the immobilization film 22, and is aspirated by the second pipette tube 26b and removed with the uncomplexed sample from the flow channel 16.

After eliminating the uncomplexed sample, elution fluid is introduced into the flow channel 16 by the first pipette tube 26a, and contacts the immobilization film 22. The elution fluid dissociates the bindable sample from the ligand. The dissociated bindable sample is drawn and aspirated by the second pipette tube 26b with the elution fluid, and removed from the flow channel 16 and withdrawn. The withdrawn bindable sample is sent to the mass spectrometer.

The assay apparatus 11 has an optical assay unit which includes a light source 32 and a photo detector 33, which measures an SPR output. Thus, whether the sample is bound with or free from the ligand is determined according to the measured data.

The light source 32 includes a light source device and an optical system, which includes a condensing lens, a diffusing plate and a polarizer. A position and angle of installation of those elements are so determined that an angle of incidence of the light satisfies the condition of the above total reflection. Examples of the light source device include a light emitting diode (LED), laser diode (LD), super luminescent diode (SLD), and other light emitting element.

The light is reflected by the interface 13b at various angles of reflection according to the angles of the incidence. An example of the photo detector 33 is a CCD area sensor or an array of photo diodes, which receives light reflected by the interface 13b at various angles of reflection, and photoelectrically converts the light into an output of SPR. The photo detector 33 outputs and sends an SPR signal to a data analyzer 91 as a controller.

When a medium in contact with the sensing surface 13a changes, the refractive index also changes. The angle of incidence of light with attenuation of reflected light is changed. The refractive index is different between a complexed state of the sample and the ligand and an uncomplexed state of those. Changes in the position of the attenuation are detected to check those are bound or free.

On the immobilization film 22, there are a measuring region 22a (act) and a reference region 22b (ref) formed in the immobilization film 22. The measuring region 22a has immobilization of a ligand, and is a region for reaction between the ligand and sample. The reference region 22b does not have immobilization of a ligand, and is used for outputting a reference signal for comparison with a signal retrieved from the measuring region 22a. Note that the reference region 22b is formed in the course of film production of the immobilization film. An example of a process of the forming has steps of surface processing of the immobilization film 22 at first, and then deactivating the reaction groups in approximately a half of an entire area of the immobilization film 22 for binding with ligand. Thus, a half of the immobilization film 22 becomes the measuring region 22a. A remaining half of the immobilization film 22 becomes the reference region 22b.

The photo detector 33 outputs an act-signal for the measuring region 22a, and a ref-signal for the reference region 22b. The data analyzer effects data analysis by obtaining a data of a finite difference between the act-signal and ref-signal, and analyzes various items according to the finite difference. This makes it possible to cancel electric noise caused by external irregularities, such as individual specificity of the sensor unit 12 or the immobilization film 22 or the sensor cells 17, mechanical changes of the assay apparatus 11, temperature changes of the liquid, and the like. A signal with a high S/N ratio can be obtained.

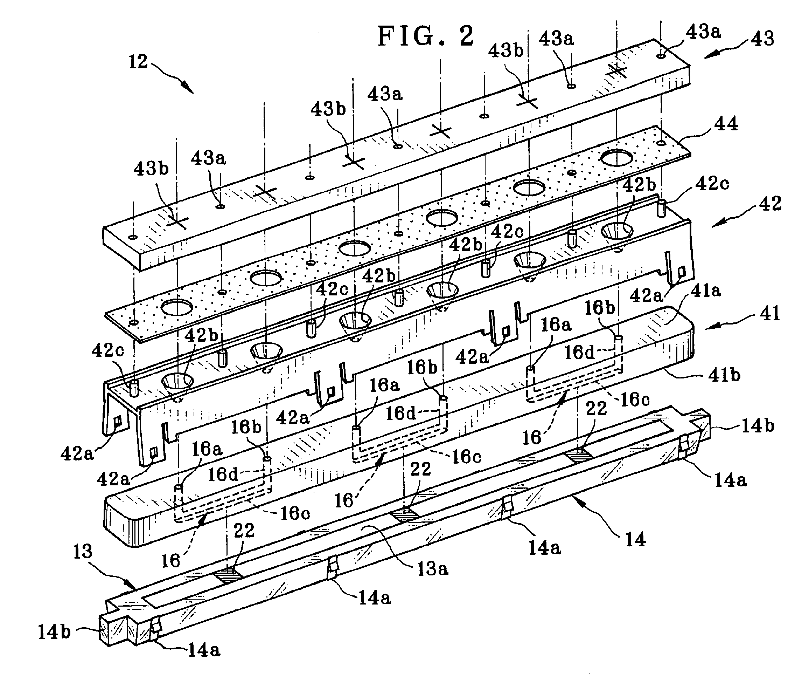

In Fig. 2, the sensor unit 12 is illustrated structurally. The sensor unit 12 includes the flow cell 41, the prism 14, a sealing mechanism 42, and a flow cell lid 43. The prism 14 is dielectric, and is overlaid with the thin film 13 on its upper surface. The sealing mechanism 42 keeps the flow cell 41 positioned by fitting its lower surface on the upper surface of the prism 14. The flow cell lid 43 is disposed higher than the sealing mechanism 42.

The thin film 13 is formed by vapor deposition on the prism 14. The thin film 13 of a strip shape is positioned on a train of the flow channels 16. Also, the immobilization film 22 is formed on the upper surface of the thin film 13 for the flow channels 16. Retention claws 14a are formed to project from the prism 14 at its sides as viewed longitudinally. Retention portions 42a of the sealing mechanism 42 are engageable with the retention claws 14a. The flow cell 41 is sandwiched between the sealing mechanism 42 and the prism 14. A lower surface 41b of the flow cell 41 is kept fitted on the prism 14. The sensor unit 12 including the flow cell 41, the thin film 13 and the prism 14 is obtained.

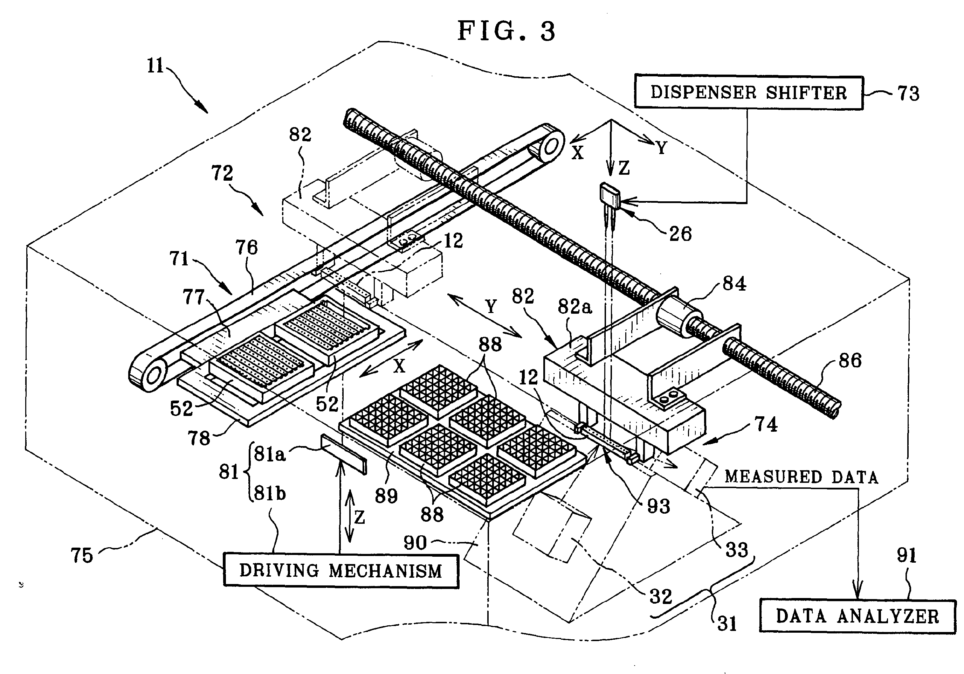

Engageable projections 14b protrude from ends of the prism 14 as viewed in its longitudinal direction. In Fig. 3, a sensor holder 52 contains a plurality of sensor units 12. The engageable projections 14b are formed for positioning the sensor unit 12 in a contained state by engagement with the sensor holder 52.

Various materials can be used for forming the prism 14, their examples including optical glasses, such as borosilicate crown (BK7) glass, barium crown (Bak4) glass, and the like; and optical plastic materials, such as polymethyl methacrylate (PMMA), polycarbonate (PC), amorphous polyolefin (APO) and the like.

Passage apertures 42b are formed in the sealing mechanism 42, and positioned at each of the first and second orifices 16a and 16b of the flow channel 16, for entry of an end of each of the pipette tubes 26a and 26b. The passage apertures 42b have a funnel shape with a decreasing diameter for introducing liquid ejected by the pipette toward the first orifice 16a. A lower face of the passage apertures 42b is connectable with each of the first and second orifices 16a and 16b of the flow channel 16 for flow of fluid with the sealing mechanism 42.

Rod shaped bosses 42c are formed to project beside the passage aperture 42b. Holes 43a are formed in the flow cell lid 43. The bosses 42c are fitted in the holes 43a, to position the flow cell lid 43 firmly. Double sided adhesive tape 44 attaches the flow cell lid 43 to an upper surface of the sealing mechanism 42. Note that suitable holes are formed in the double sided adhesive tape 44, and associated with the passage aperture 42b and the bosses 42c.

The flow cell lid 43 covers the passage aperture 42b communicating to the flow,channel 16, and prevents evaporation of liquid in the flow channel 16. The flow cell lid 43 is formed from rubber, elastomer, resin or other elastic material. A cross shaped slit 43b is formed in the flow cell lid 43 and positioned respectively at the passage aperture 42b. The flow cell lid 43 is required to cover the passage aperture 42b in order to prevent liquid in the flow channel 16 from evaporation. However, no pipette can enter the passage aperture 42b if covering of the flow cell lid 43 is complete. So the cross shaped slit 43b is formed to enable insertion of pipettes, and to close the passage aperture 42b while no pipette is inserted. If a pipette is forcibly pressed into the cross shaped slit 43b, its edges are elastically deformed, to allow receipt of the pipette by becoming open. When the pipette is externally pulled out, the cross shaped slit 43b elastically closes the passage aperture 42b again by returning to its initial state.

The flow cell 41 extends in one direction, in which the flow channels 16 are arranged. Note that, in the sensor unit 12, the number of the flow channels 16 may not be three, but can be one or two, or four or more.

Also, a bar code (not shown) is printed on the sensor unit 12, and is information of identifying the sensor unit 12, for example ID number. The information is used for managing measured data of the assay.

In Fig. 3, the assay apparatus 11 includes a holder shifter 71, a pickup mechanism 72, a dispenser shifter 73 and an assay stage 74. A casing 75 contains those included in the assay apparatus 11. The sensor unit 12 is set in the assay apparatus 11 in a state contained in the sensor holder 52. The plurality of the sensor units 12 in the sensor holder 52 are transferred to the assay stage 74. Various steps in the operation are carried out on the assay stage 74, including contact of the sample fluid with the ligand, assay of interaction between the ligand and the sample according to the surface plasmon resonance, and recovery of the bindable sample.

The holder shifter 71 includes a belt 76, a carriage 77, and a support panel or pallet 78. The carriage 77 is secured to the belt 76. The pallet 78 is secured to the carriage 77, and supports the sensor holder 52 containing the sensor unit 12 after the ligand immobilizing flow. The holder shifter 71 shifts the pallet 78 with the sensor holder 52 in the direction X, and moves the sensor unit 12 in the sensor holder 52 to the pickup position of the pickup mechanism 72 for pickup.

The pickup mechanism 72 picks up the sensor unit 12 from the sensor holder 52, and includes a first sensor shifter 81 and a handling head or second sensor shifter 82. The first sensor shifter 81 shifts up the sensor unit 12 from the sensor holder 52. The handling head or second sensor shifter 82 squeezes and holds the sensor unit 12 shifted up by the first sensor shifter 81 over the sensor holder 52. An opening is formed in a lower portion of the sensor holder 52. Also, an aperture is formed in the pallet 78 in a position of the opening. The first sensor shifter 81 includes a shifting panel 81a and a driving mechanism 81b. The shifting panel 81a moves up through the pallet 78, and contacts the lower face of the sensor unit 12 in the opening of the sensor holder 52 to shift up the sensor unit 12. The driving mechanism 81b drives the shifting panel 81a to move up and down vertically.

The handling head 82 has a pair of claw arms for squeezing the sensor unit 12 for holding. A sensor shifter body 82a for handling of the handling head 82 is connected with a ball screw 86 by a nut 84. The handling head 82 is kept movable by the ball screw 86 between the pickup position directly higher than the sensor holder 52 and the assay position at the assay stage 74. The handling head 82 grasps the sensor unit 12 when in the pickup position, shifts in the direction Y to set the sensor unit 12 on the assay stage 74. Also, the sensor unit 12 being used is shifted by the handling head 82 from the assay stage 74 to the pickup position, and released on and returned to the sensor holder 52.

The light source 32 and the photo detector 33 in the assay stage 74 are disposed under the position of the sensor unit 12. A support 90 of the optical assay unit in the assay stage 74 has a triangular form as viewed in the section. The light source 32 and the photo detector 33 are placed on inclined surfaces of the support 90 in different directions. The sensor unit 12 transferred from the pickup position by the handling head 82 is guided by a guide rail disposed on the top of the support 90, and then moved to the assay stage 74.

The sensor unit 12 includes a plurality of the sensor cells 17. The bindable sample is recovered for each of the sensor cells 17. The sensor unit 12 is shifted on the assay stage 74 in the direction Y intermittently at the pitch of arrangement of the sensor cells 17, so each of the sensor cells 17 is set in the assay position in the light path of the light source 32 one after another.

A table 89 is disposed beside the assay stage 74. Plural well plates 88 as delivery reservoir or sample collection reservoir are placed on the table 89. Wells are arranged in the well plates 88 in a matrix form, and store fluid. A first one of the well plates 88 is a delivery reservoir for storing sample fluid. A second one of the well plates 88 is a waste receptacle for storing waste fluid drawn from the flow channel 16. A third one of the well plates 88 is a sample collection reservoir for storing the bindable sample of the samples for recovery. A fourth one of the well plates 88 is a delivery reservoir stores buffer and elution fluid.

The dispenser shifter 73 moves or shifts the dispensing head 26 in the directions X, Y and Z toward the sensor unit 12 on the assay stage 74 or the table 89 for supporting the well plates 88. The dispensing head 26 accesses the well plates 88 for drawing fluid. The dispensing head 26 with the fluid shifts to the assay stage 74 for dispensing the fluid to a targeted one of the sensor cells 17. Also, the dispensing head 26 aspirates fluid from the sensor cells 17 and transfers the fluid to the well plates 88.

Pipette tips are fitted on ends of pipette nozzles of respectively the pipette tubes 26a and 26b in a removable manner. The assay apparatus 11 includes a pipette tip storage and a discarding receptacle (not shown) so positioned that the dispensing head 26 can access those. The pipette tip storage stores the pipette tips for renewal. The discarding receptacle receives used pipette tips. The pipette tips are detipped for renewal so as to prevent mixture and contamination of plural liquids in the pipette tips in direct contact with flowing liquid. The pipette tips are retained by mechanically engaging with the pipette nozzles when fitted therein. A release mechanism (not shown) for detipping is associated with the pipette tubes 26a and 26b, and movable to remove the pipette tips from the pipette nozzles by pushing down the pipette tips at the pipette nozzles. To renew the pipette tips, the dispensing head 26 moves to a discarding receptacle, so the pipette tips are released after being used. Then the dispensing head 26 moves to the pipette tip storage, and picks up and sets unused pipette tips on the pipette nozzles.

An example of the data analyzer 91 is a personal computer, receives and records measured data from the photo detector 33. Also, the data analyzer 91 analyzes the biochemical interaction according to the measured data. According to the analysis, whether the sample is bound with or free from the ligand is determined for each of the sensor cells 17 in the sensor unit 12. The data analyzer 91 includes a data storage device such as HDD (hard disk drive). The data analyzer 91 writes data of determined to the data storage device.

The data analyzer 91 is also a unit for controlling elements in the assay apparatus 11. The data analyzer 91 receives results of determination, and controls the dispensing head 26. If the fluid from the sensor cell 17 contains the bindable sample, then the data analyzer 91 causes the dispensing head 26 to move to a collection reservoir part of the well plates 88, and transfers the fluid containing the bindable sample. If the fluid from the sensor cell 17 contains no bindable sample, then the data analyzer 91 causes the dispensing head 26 to move to a waste receptacle part of the well plates 88, and transfers the fluid.

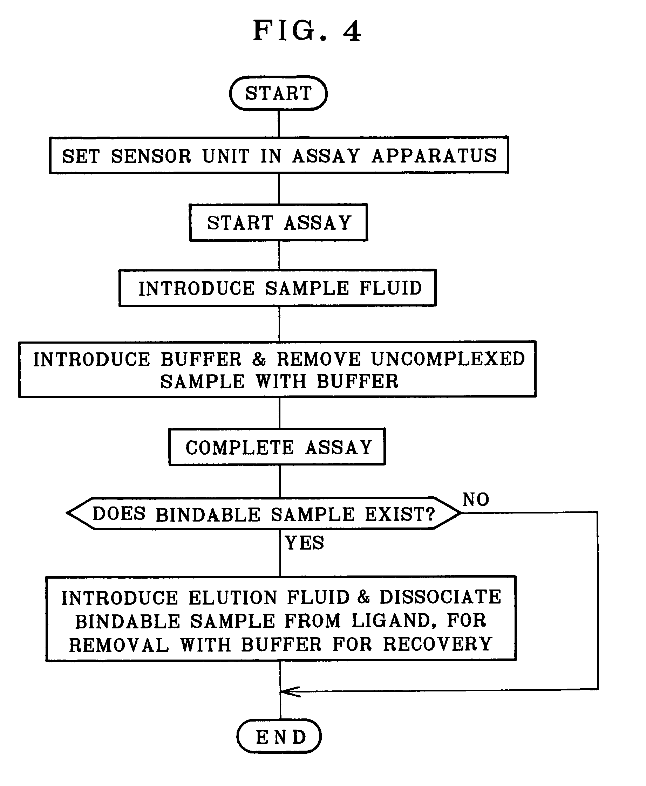

The operation of the embodiment is described with reference to a flow chart of Fig. 4. At first, the sensor unit 12 with immobilized ligand is contained in the sensor holder 52, and set on the pallet 78 of the assay apparatus 11. The sensor unit 12 in the sensor holder 52 is respectively picked up by the pickup mechanism 72, and shifted to the assay stage 74. A first one of the sensor cells 17 in the sensor unit 12 in the assay stage 74 is set in the assay position.

When the sensor cell 17 is set in the assay position, assay is started. The dispensing head 26 is shifted to the table 89. The first pipette tube 26a draws sample fluid from the well plate 88, and then dispenses the sample fluid into the sensor cell 17 in the assay position. The sample fluid is kept in the sensor cell 17 for a predetermined time. Thus, the sample fluid contacts the ligand. After this, the second pipette tube 26b aspirates the sample fluid and removes the same from the sensor cell 17. The removed sample fluid is dispensed to the well plate 88 for withdrawal. Thus, it is possible to use a relatively smaller amount of the sample fluid in comparison with a known method of continuous dispensation of sample fluid through a tube to the flow channel, because the dispensing head 26 of the invention introduces the sample fluid to the sensor cell 17 for contact with the ligand.

Then the first pipette tube 26a in the dispensing head 26 introduces buffer into the sensor cell 17 at the same time as the second pipette tube 26b removes the introduced buffer from the sensor cell 17 by aspiration. Thus, uncomplexed sample without binding with the ligand is eliminated from the sensor cell 17 with the buffer. The buffer with the uncomplexed sample is withdrawn in the well plate 88 as waste receptacle.

After the flow of the buffer, the SPR assay is completed. The data analyzer 91 evaluates the measured data, and determines whether the sample is bound with or free from the ligand in the dispensed sample. If the sample is free from the ligand, operation of the particular one of the sensor cells 17 is terminated without recovery of the sample.

If bindable sample of the samples exists, then the first pipette tube 26a of the dispensing head 26 introduces elution fluid into the sensor cell 17. The elution fluid dissociates the bindable sample from the ligand in the sensor cell 17. The second pipette tube 26b aspirates the bindable sample with the elution fluid for removal from the sensor cell 17. The dispensing head 26 causes the well plate 88 for recovery to recover the bindable sample.

When operation of one of the sensor cells 17 is terminated, the sensor unit 12 is shifted to set a succeeding one of the sensor cells 17 at the assay position, for similar operation. At the end of the operation for all of the sensor cells 17 in the sensor unit 12, then the handling head or second sensor shifter 82 moves back the sensor unit 12 to the sensor holder 52. A succeeding one of the sensor unit 12 is shifted to the assay stage 74, for the same operation. The recovered bindable sample is sent to the mass spectrometer, for analysis.

Thus, it is possible to keep high efficiency in the recovery in comparison with the known method of continuous dispensation of sample fluid through a tube to the flow channel, because the dispensing head 26 of the invention introduces the sample fluid to the flow channel 16, or draws fluid from the same. Also, this is because of the flow cell 41 is a single use product in combination with the sensor unit 12.

In the above embodiment, the sample recovery is combined with the assay apparatus 11. However, existence or lack of a bindable sample can be evaluated according to mass spectrometry, without a system of surface plasmon resonance. In Fig. 4, one preferred sample recovery device 101 for bindable sample is illustrated, which is for use in combination with the mass spectrometry.

The sample recovery device 101 includes a casing 102 and a recovery stage 103 for placement of a plurality of sensor units 12. The sensor unit 12 in the recovery stage 103 is subjected to flow of sample fluid to the immobilization film 22 after immobilization, and to recovery of bindable sample. The recovery stage 103 is used for recovery of bindable sample. The sensor unit 12 is set on the recovery stage 103 as contained in the sensor holder 52. A pallet 104 is disposed in the recovery stage 103, and supports each of the sensor holder 52. For example, the recovery stage 103 is large enough for ten sensor holders 52.

Plural delivery reservoirs 105 for sample are disposed on the casing 102 for storing various fluids for entry to the flow channel 16. The fluids include sample fluid, buffer, elution fluid and the like. A well plate 106 is disposed on the casing 102 as a sample collection reservoir for bindable sample and waste receptacle.

A dispensing head or dispenser 109 is incorporated in the sample recovery device 101. A plurality of, for example three, dual pipette assemblies or pipette tubes 108 are included in the dispensing head 109. A dispenser shifter 110 shifts the dispensing head 109 in three directions X, Y and Z. The dispensing head 109 accesses elements including the sensor unit 12, the well plate 106 and portions of the delivery reservoirs 105 on the recovery stage 103, and introduces fluid such as sample fluid, buffer and elution fluid, and recovers the fluid toward the well plate 106. As the dual pipette assemblies 108 are three in the dispensing head 109, the three sensor cells 17 in the sensor unit 12 can be subjected to dispensing and aspirating fluid at the same time. Also, a pipette tip storage 111 stores pipette tips 112 of pipette tubes.

It is impossible in the sample recovery device 101 to determine whether the sample is bound with or free from the ligand. Recovered fluids in the well plate 106 include a fluid containing a bindable sample and a fluid without a bindable sample. However, all of the fluids are transferred to a mass spectrometer. Existence of a bindable sample is checked. A bindable sample, if found, is identified and analyzed.

In the above embodiments, a single apparatus of either the assay apparatus 11 or the sample recovery device 101 is used for the fluid dispensation and recovery. However, a recovery device can be separate from an apparatus for dispensation. At first, the sensor unit 12 is set in the assay apparatus 11 for introducing the sample fluid and determining binding between the ligand and the sample fluid. The sensor unit 12, if the sample is found bound with the ligand, is transferred to the sample recovery device 101 for recovery. This is effective in raising efficiency in the operation, in particular if the number of the sensor unit 12 is considerably great. It is also possible to send measured data from the assay apparatus 11 to the sample recovery device 101, so the sample recovery device 101 can discriminate the sensor unit 12 with bindable sample from the sensor unit 12 without bindable sample, and control the recovery operation by utilizing the data of the discrimination.

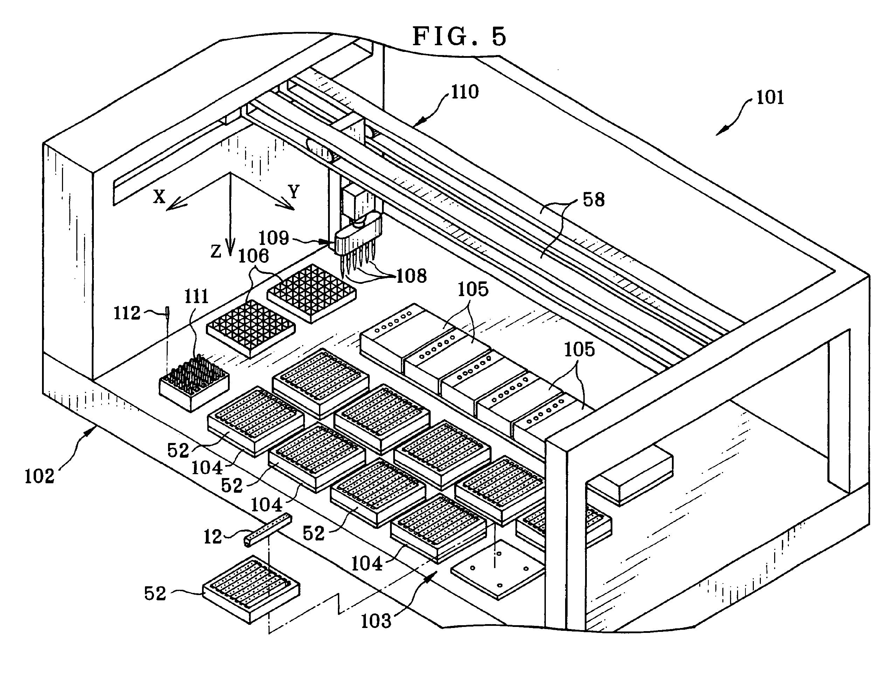

Also, the flow channel may be single, unlike the above embodiment with plural flow channels in the sensor unit. It is preferable to enlarge an area of the immobilization film to bind with a sample, for the purpose of raising an enlarged amount of the bindable sample recovered from each one of the flow channels. In Fig. 5, a sensor unit or immobilization unit 120 for assay has a flow channel 121. A flow cell recess 121a of the flow channel 121 has a greater length than that of the flow cell recess 16c of the sensor unit 12. An immobilization film or linker film 122 for ligand is overlaid on the entirety of the region opposed to the flow cell recess 121a. A flow cell 123 of the sensor unit 120 has a length equal to that of the flow cell 41 of the sensor unit 12 above. Orifices 121b are formed in end portions of the flow cell 123. The flow cell recess 121a has a length approximately equal to an interval between the orifices 121b. The immobilization film 122 has a long shape and has a length corresponding to the length of the flow cell recess 121a. A ligand is immobilized on the whole of the immobilization film 122.

A location of measuring the SPR output is determined nearer to the orifice 121b in the region of the immobilization film 122. The act-region for the act-signal is determined at the end of the immobilization film 122. The ref-region for the ref-signal is offset from the immobilization film 122. There is no local deactivation of the immobilization film 122. Note that, the ref-region for the ref-signal is determined on the immobilization film 122 and at a portion where reaction groups are deactivated as described in the above embodiment.

Thus, the large area of extension of the immobilization film 122 is effective in raising an amount of the bindable sample being bound and an amount of the recovered bindable sample. Note that the sealing mechanism and flow cell lid are not shown, but are used for combining the flow cell 123 and the prism 14 in a similar manner to the sensor unit 12.

In addition to the SPR sensor, an assay sensor unit according to the invention can be other sensor in utilizing attenuated total reflection. One example of sensor unit according to utilizing the attenuated total reflection is a leaky mode sensor. The leaky mode sensor includes a dielectric medium, a cladding layer overlaid on the dielectric medium, and an optical waveguide layer overlaid on the cladding layer, those layers constituting a thin film. A first surface of the thin film is a sensing surface on the optical waveguide layer. A second surface of the thin film is a metal/dielectric interface on the cladding layer. When light becomes incident on the metal/dielectric interface to satisfy the condition of the total reflection, part of the light passes through the cladding layer, and enters the optical waveguide layer. A guided mode to propagate light is excited responsively in the optical waveguide layer, to attenuate the reflected light on the metal/dielectric interface. An angle of the incidence at which the guided mode is excited is changeable according to the refractive index of the medium positioned on the sensing surface. This is similar to the characteristic of the resonance angle of the SPR sensor. The attenuation of the reflected light is detected, so that it possible to measure the interaction on the sensing surface.

The ligand immobilization unit of the invention may not be a sensor unit, particularly in the case of lack of assay according to the attenuated total reflection. The support may not be a prism. The ligand immobilization unit can have the flow cell and the support which is distinct from the prism but supports the flow cell.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A sample recovery method of recovering a bindable sample obtained from a sample by causing a sample fluid of said sample to contact an immobilization film (22, 122) provided with a ligand immobilized thereon, and by binding said sample with said ligand, said sample recovery method comprising:
wherein an immobilization unit (12, 120) is used, and includes a support (14) overlaid with said immobilization film, and a flow cell (41, 123), secured to said support, and having a flow channel (16, 121) for introducing said sample fluid to said immobilization film;
a dispensing step of dispensing said sample fluid into said flow channel through a dispensing head (26, 109) to said immobilization film, wherein said dispensing head has a pipette assembly (26a, 26b, 108) for accessing orifices (16a, 16b, 121b) formed at ends of the flow channel;
a dissociating step of dispensing elution fluid into said flow channel through said dispensing head to said immobilization film, and of dissociating said bindable sample from said immobilization film; and
a recovering step of removing said bindable sample with said elution fluid from said flow channel by aspirating said elution fluid through said dispensing head, and of recovering said bindable sample by use of a collection reservoir (88, 106).

2. A sample recovery method as defined in claim 1, further comprising an eliminating step of, after said dispensing step and before said dissociating step, dispensing buffer into said flow channel through said dispensing head, and of eliminating uncomplexed sample with said buffer from said flow channel, said uncomplexed sample being derived from said sample and remaining unbound with said ligand.

3. A sample recovery method as defined in claim 2, wherein said support is a transparent dielectric support, said immobilization unit is a sensor unit and has a thin film overlaid on said dielectric support, and an immobilization film overlaid on said thin film, and when illuminating light is applied through said dielectric support to an interface between said thin film and said dielectric support in a form satisfying a total reflection condition, an attenuation angle of attenuation of total reflection of said illuminating light is changed according to interaction between said ligand and said sample.

4. A sample recovery method as defined in claim 3, wherein said thin film is film of metal, and said sensor unit is a surface plasmon resonance sensor unit for generating surface plasmon resonance on said metal film.

5. A sample recovery method as defined in claim 3, further comprising a measuring step of measuring attenuation of said illuminating light being reflected after said sample fluid flows to said immobilization film; and
whether said sample is bound with or free from said ligand is determined according to measured data from said optical assay unit, wherein said recovering step is carried out if said sample is bound with said ligand.

6. A sample recovery method as defined in claim 5, wherein said sensor unit is set on an assay stage to carry out said dispensing step and said measuring step;
if said sample is bound with said ligand, said sensor unit is transferred to a recovery stage distinct from said assay stage, to carry out said recovering step.

7. A sample recovery method as defined in claim 6, wherein said assay stage is disposed in an assay apparatus having an optical assay unit, and said recovery stage is disposed in a sample recovery device having a casing separate from said assay apparatus.

8. A sample recovery device for recovering a bindable sample obtained from a sample by causing a sample fluid of said sample to contact an immobilization film (22, 122) provided with a ligand immobilized thereon, and by binding said sample with said ligand, said sample recovery device comprising:
a recovery stage (103) for being loaded with an immobilization unit (12, 120) in a removable manner, wherein said immobilization unit includes a support (14) overlaid with said immobilization film, and a flow cell (41, 123), secured to said support, and having a flow channel (16, 121) for introducing said sample fluid to said immobilization film; and
a dispensing head (26, 109), having a pipette assembly (26a, 26b, 108) for fluid dispensation and aspiration, for accessing said recovery stage, a delivery reservoir (88 , 105) for storing said sample fluid, and a collection reservoir (88, 106) for recovering said bindable sample removed from said flow channel.

9. A sample recovery device as defined in claim 8, wherein said support is a transparent dielectric support, said immobilization unit is a sensor unit and has a thin film overlaid on said dielectric support, and an immobilization film overlaid on said thin film, and when illuminating light is applied through said dielectric support to an interface between said thin film and said dielectric support in a form satisfying a total reflection condition, an attenuation angle of attenuation of total reflection of said illuminating light is changed according to interaction between said ligand and said sample.

10. A sample recovery device as defined in claim 9, wherein said pipette assembly in said dispensing head accesses orifices formed at ends of the flow channel for fluid dispensation and aspiration;
said dispensing head dispenses said sample fluid into said flow channel to said immobilization film, then dispenses elution fluid into said flow channel to said immobilization film, for dissociating said bindable sample from said immobilization film, and then removes said bindable sample with said elution fluid from said flow channel by aspirating said elution fluid, for recovering said bindable sample by use of a collection reservoir.

11. A sample recovery device as defined in claim 9, further comprising an optical assay unit for assay to generate measured data as to whether said sample is bound with or free from said ligand, said optical assay unit having a light source for applying illuminating light to said sensor unit, and a photo detector for receiving said illuminating light being reflected, to output a detection signal.

12. A sample recovery device as defined in claim 11, further comprising a controller for determining whether said sample is bound with or free from said ligand according to said measured data from said optical assay unit, and for driving said dispensing head to recover said bindable sample if said sample is bound with said ligand.

13. A sample recovery device as defined in claim 8, wherein after dispensing said sample fluid and before dispensing said elution fluid, said dispensing head dispenses buffer into said flow channel, and eliminates uncomplexed sample with said buffer from said flow channel, said uncomplexed sample being derived from said sample and remaining unbound with said ligand.

14. A sample recovery device as defined in claim 13, wherein an assay stage is used for setting said sensor unit to dispense said sample fluid and for said assay;
if said sample is bound with said ligand, said sensor unit is transferred to said recovery stage to recover said bindable sample.

15. A sample recovery device as defined in claim 14, further comprising a casing having said recovery stage;
wherein said assay stage is disposed in an assay apparatus having said optical assay unit, and separate from said casing.
